# EUROPEAN PATENT SPECIFICATION

(11) **EP 1 680 880 B1**
(45) Date of publication and mention of the grant of the patent: **16.12.2009**
(21) Application number: 04796690.8
(22) Date of filing: 28.10.2004
(51) Int. Cl.: H04L 12/24, H04L 29/14, H04L 12/28

(54) **WIRELESS LOCAL AREA NETWORK (WLAN) METHODS AND COMPONENTS THAT UTILIZE TRAFFIC PREDICTION**
Verfahren und komponenten eines drahtlosen lokalen netzwerks (WLAN), die Verkehrsprognosen nutzen
RESEAU LOCAL SANS FIL (WLAN) ET PROCEDES ET ELEMENTS UTILISANT LES PREVISIONS EN MATIERE DE TRAFIC

(30) Priority: 05.11.2003 US 517693 P
(43) Date of publication of application: 19.07.2006
(73) Proprietor: INTERDIGITAL TECHNOLOGY CORPORATION, Wilmington, DE 19810 (US)
(72) Inventor: LU, Guang, Montreal, Québec H4B 2Y6 (CA)
(74) Representative: Engdahl, Stefan
(86) International application number: PCT/US2004/035888
(87) International publication number: WO 2005/048499

(56) References cited:
- WO-A-99/66748
- US-A- 5 666 348
- US-A1- 2002 093 976
- US-A1- 2002 163 933
- US-A1- 2002 172 186
- US-A1- 2002 184 389
- US-A1- 2003 018 803
- US-A1- 2003 081 628

## Description

### FIELD OF INVENTION

The present invention generally relates to wireless local area networks (WLANs), and in particular to a system and method for predicting traffic in a WLAN, particularly WLANs compliant with one or more of the family of standards known as 802.11.

BACKGROUND

Wireless communication systems are well known in the art. Generally, such systems comprise communication stations, which transmit and receive wireless communication signals between each other. Depending upon the type of system, communication stations typically are one of two types of wireless transmit/receive units (WTRUs): base stations or subscriber units, which include mobile units.

The term base station as used herein includes, but is not limited to, a base station, Node B, site controller, access point or other interfacing device in a wireless environment that provides WTRUs with wireless access to a network with which the base station is associated.

The term WTRU as used herein includes, but is not limited to, a user equipment, mobile station, fixed or mobile subscriber unit, pager, or any other type of device capable of operating in a wireless environment. WTRUs include personal communication devices, such as phones, video phones, and Internet ready phones that have network connections. In addition, WTRUs include portable personal computing devices, such as PDAs and notebook computers with wireless modems that have similar network capabilities. WTRUs that are portable or can otherwise change location are referred to as mobile units. Generically, base stations are also WTRUs.

Typically, a network of base stations is provided where each base station is capable of conducting concurrent wireless communications with appropriately configured WTRUs. Some WTRUs are configured to conduct wireless communications directly between each other, i.e., without being relayed through a network via a base station. This is commonly called peer-to-peer wireless communications. Where a WTRU is configured communicate with other WTRUs it may itself be configured as and function as a base station. WTRUs can be configured for use in multiple networks with both network and peer-to-peer communications capabilities.
The American patent US5666348 discloses a method and system for controlling admission to a packet switched radio channel (PRCH). In this method, a PRCH comprises a PRCH admission control function which evaluates a user's admission request for a packet call by determining if the estimated data traffic required by the packet call plus the traffic from current packet calls having a priority higher than, or equal to, the priority of the packet call is less than the maximum tolerate traffic. A user may get access to a PRCH to initiate packet switching service by sending a service request that includes required estimated average user data traffic and required estimated maximum user data traffic.

One type of wireless system, called a wireless local area network (WLAN), can be configured to conduct wireless communications with WTRUs equipped with WLAN modems that are also able to conduct peer-to-peer communications with similarly equipped WTRUs. Currently, WLAN modems are being integrated into many traditional communicating and computing devices by manufacturers. For example, cellular phones, personal digital assistants, and laptop computers are being built with one or more WLAN modems.

Popular WLAN environments with one or more WLAN base stations, typically called access points (APs), are built according to the IEEE 802.11 standards. Access to these networks usually requires user authentication procedures. Protocols for such systems are presently being standardized in the WLAN technology area. One such framework of protocols is the IEEE 802 family of standards.

A basic service set (BSS) is the basic building block of an IEEE 802.11 WLAN and this consists of WTRUs typically referred to as stations (STAs). Basically, the set of STAs which can talk to each other can form a BSS. Multiple BSSs are interconnected through an architectural component, called distribution system (DS), to form an extended service set (ESS). An access point (AP) is a station (STA) that provides access to DS by providing DS services and generally allows concurrent access to DS by multiple STAs.

The 802.11 standards allow multiple transmission rates (and dynamic switching between rates) to be used to optimize throughput. The lower rates have more robust modulation characteristics that allow greater range and/or better operation in noisy environments than the higher rates. The higher rates provide better throughput. It is an optimization challenge to always select the best (highest) possible rate for any given coverage and interference condition.

The currently specified rates of various versions of the 802.11 standard are set forth in Table 1 as follows:

**Table 1: 802.11 Standard Data Rates**

| **Standard** | **Supported Rates (Mbps)** |
|---|---|
| 802.11 (original) | 1,2 |
| 802.11a | 6, 9, 12, 18, 24, 36, 48, 54 |
| 802.11b | 1, 2, 5.5, 11 |
| 802.11g | 1, 2, 5.5, 6, 9, 11, 12, 18, 24, 36, 48, 54 |

For 802.11g, the rates 6, 9, 12, 18, 24, 36, 48 and 54 Mbps use orthogonal frequency division modulation (OFDM). The choice of the rate can affect performance in terms of system and user throughput, range and fairness.

Conventionally, each 802.11 device has a Rate Control algorithm implemented in it that is controlled solely by that device. Specifically, uplink (UL) Rate Control in STAs and down link (DL) Rate Control in APs. The algorithm for rate switching is not specified by the standards. It is left up to the STA (and AP) implementation.

The rapid emergence of WLAN technology and the surging number of deployments and users has created new challenges in terms of network capacity management and congestion avoidance. This invention provides a practical method of traffic prediction for WLANs, thus reducing the chance of congestion and enhancing quality of service (QoS).

SUMMARY

A communication method, system and components are provided that includes use of traffic predictions determined by a wireless transmit/receive unit (WTRU). Preferably, the invention is implemented by predicting traffic in a wireless local area network (WLAN), between a WTRU and a WLAN access point (AP) that begins by determining a traffic level at the WTRU. The WTRU is preferably configure to create association requests that include a traffic level prediction. The association request is sent to an AP which is configured to evaluate the request based in part on the traffic level prediction. The AP is further configured to take action in response to the evaluation. Such actions include the generation and transmission of signals accepting the association request, rejecting the association request, or partially accepting the association request. The WTRU is preferably configured to receive and process the AP signals to thereby obtain communication access to the AP in accordance with the action determined by the AP in response to the WTRU's association request.

Traffic prediction can be applied at different phases, e.g., association and transmission, and from both uplink and downlink, e.g., access point (AP) side and user WTRU side. With the predicted traffic information, the AP can make more intelligent decisions on user admission, and it can also increase the efficiency of bandwidth utilization and reduce collisions.

The traffic prediction method is preferably implemented at a medium access control (MAC) layer and an application layer to make it applicable to all IEEE 802.11 protocols.

In one aspect of the invention, a wireless transmitter/receiver unit (WTRU) is configured for use in a wireless local area network (WLAN) having traffic congestion control. The WTRU has a transmitter, a receiver and an associated processing unit. The processing unit is configured to generate traffic prediction information. The transmitter is configured to embed traffic prediction information in wireless communication frames transmitted by the WTRU to a controlling entity. The receiver is configured to receive wireless communication frames from the controlling entity including instructions responsive to traffic prediction information transmitted to the controlling entity.

Preferably, the WTRU is configured for use in an IEEE 802.11 compliant system and the transmitter is configured to embed traffic prediction information in association request frames. The receiver is preferably configured to receive responsive instructions granting or denying association in whole or in part generated based upon transmitted embedded traffic prediction information. When the WTRU is configured to operate in an IEEE 802.11 compliant system, the transmitter is preferably configured to embed traffic prediction information in request to send (RTS) frames and the receiver is configured to receive contention window adjustment instructions in management frames from the controlling entity.

The transmitter can be configured to transmit data based on a contention window and the receiver configured to receive instructions from the controlling entity which may include contention window adjustment instructions. In such case, the WTRU preferably has a contention widow control for adjusting the contention window upon which the transmitter bases transmission responsive to contention window adjustment instructions received from the controlling entity. The contention widow control preferably sets a default minimum contention window and increases the minimum contention window responsive to contention window adjustment instructions received from the controlling entity reflective of increased wireless communication congestion.

In another aspect of the invention, a WTRU is configured to implement traffic congestion control in a WLAN. Such a WTRU also has a transmitter, a receiver and an associated processing unit. The receiver being configured to detect embedded traffic prediction information in wireless communication frames transmitted by an other WTRU. The processing unit is preferably configured to evaluate received traffic prediction information from the other WTRU in combination with other communication traffic data and to generate a responsive instruction. The transmitter is preferably configured to transmit wireless communication frames including generated instructions responsive to the other WTRU.

Such a WTRU is preferably configured to operate in an IEEE 802.11 compliant system as an access point AP. As such, the receiver is preferably configured to detect embedded traffic prediction information in a received association request frame from an other WTRU. The processing unit is preferably configured to evaluate traffic prediction information received in an association request frame from the other WTRU and to generate an admission grant, limited admission grant or an admission denial instruction based thereon. The transmitter is then configured to transmit the generated admission instruction to the other WTRU.

The AP's transmitter is preferably configured to transmit data contention window adjustment instructions to selected WTRUs generated by the processing unit based upon received traffic prediction information from multiple WTRUs. The AP's processing unit preferably is configured to generate an instruction to increase contention widow size when a selected congestion level is determined in connection with evaluating received traffic prediction information. The AP's the receiver is preferably configured to detect embedded traffic prediction information in request to send (RTS) frames transmitted from WTRUs and the transmitter is configured to transmit contention window adjustment instructions in management frames.

A more detailed understanding of the invention may be had from the following description of a preferred embodiment, given by way of example, and to be understood in conjunction with the accompanying drawings wherein like elements are designated by like numerals.

BRIEF DESCRIPTION OF THE DRAWING(S)

Figure 1 is a system overview diagram illustrating WLAN communication.

Figure 2 is a diagram showing an overview of a system in accordance with the present invention.

Figure 3 is a diagram of an association request frame structure in accordance with the present invention.

Figure 4 is a flow chart illustrating an example of AP decision making at an association phase in accordance with the present invention.

Figure 5 is a signaling flow diagram showing the operation of the present invention.

Figure 6 is a flow chart illustrating an example ofAP flow control in accordance with the present invention.

**TABLE OF ACRONYMS**

| | |
|---|---|
| AP | Access Point |
| CIF | Capability Information Field |
| CTS | Clear to Send |
| MAC | Medium Access Control |
| QoS | Quality of Service |
| RRM | Radio Resource Management |
| RTS | Request to Send |
| STA | Station |
| WLAN | Wireless Local Area Network |
| WTRU | Wireless Transmitter/receiver unit |

DETAILED DESCRIPTION OF THE PREFERRED EMBODIMENT(S)

The terms base station, Access Point (AP), Station (STA), WTRU, and mobile unit are used in their general sense as described above. The present invention provides a wireless radio access network having one or more networked base stations through which wireless access service is provided for WTRUs. The invention is particularly useful when used in conjunction with mobile units or mobile STAs, as they enter and/or travel through the respective areas of geographic coverage provided by respective base stations or other APs. The WTRUs can have an integrated or installed wireless WLAN device, such as 802.11(a), 802.11(b), 802.11(g) or Bluetooth compliant device, in order to communicate with each other. However, the proposed invention is applicable in any wireless system.

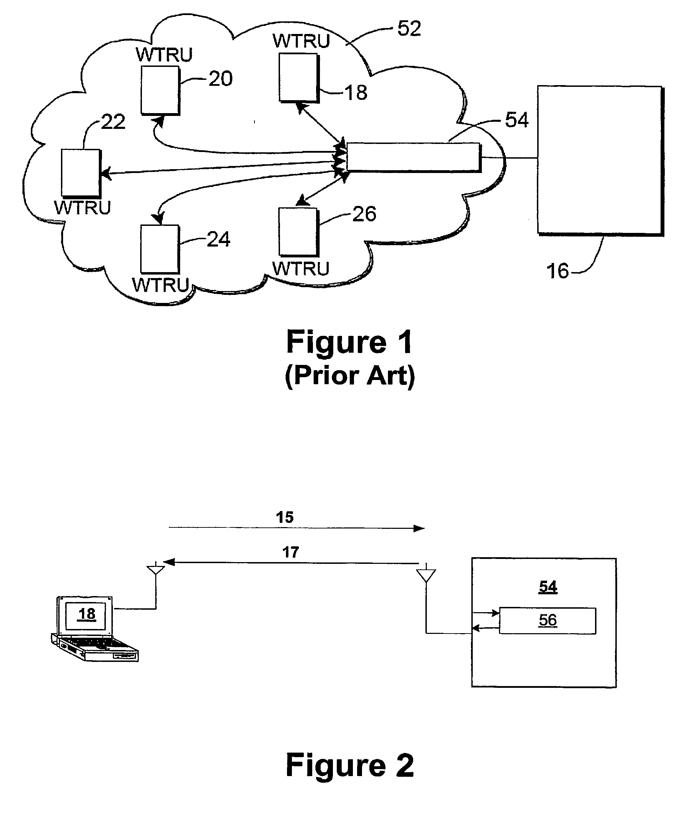

Referring to Figure 1, a WLAN is illustrated where WTRUs conduct wireless communications via an Access Point (AP) 54 which can be connected with other network infrastructure such as a Network Management Station (NMS) 16. The AP 54 is shown as conducting communications with WTRU 18, WTRU 20, WTRU 22, WTRU 24, and WTRU 26. The communications are coordinated and synchronized through the AP 54. Such a configuration is also called a basic service set (BSS) within WLAN contexts. Generally, the WLAN system supports WTRUs with different data rates as reflect in the rate chart above. In some cases an AP is configured to support multiple types of WTRUs, such as 802.11(b) compliant WTRUs as well as 802.11(g) compliant WTRUs.

The inventor has recognized that traffic prediction can advantageously be used by an AP to control the flow of wireless communications. Traffic prediction is the predicted traffic volume from WTRUs. Traffic volume includes the load, traffic characteristics, traffic duration, etc. One example of load levels is to categorize services in one of three categories: high, medium, low. Traffic characteristics can be selected, for example, as between bursty or constant. Traffic duration can be designated, for example, as between a long or a short amount of time.

As an example at the application layer, an on-line gaming user will have a higher traffic volume than a user checking email periodically. However, different computer games may have different data demand characteristics. One may require a relatively continual stream of information, such as video streaming, Another may require relatively large amounts of data to be sporadically communicated, i.e. a bursty data flow. A user intending to play a video streaming on-line game is able to provide a traffic prediction of high, continuous traffic. A user intending to check e-mail is able to provide a traffic prediction of low, bursty traffic.

Traffic prediction can be obtained by multiple ways among different communication layers. During transmission, a WTRU can measure the transmit throughput as total number of frames per second, and use it as traffic prediction for the following period of time. When a user launches an application, the traffic volume associated with this application (e.g., web browsing, streaming videos, etc.) can be used as traffic prediction. Accordingly, a processing unit of a WTRU is preferably configured to generate traffic prediction information based on such factors in a form that can be embedded in transmitted communication frames for detection by an AP.

In a WLAN, user communications between a WTRU and an AP are conducted after access has been granted, in whole or in part, as initially determined in as association phase. At the association phase, the AP can make an informed decision with predicted traffic information in accordance with the present invention.

In current IEEE 802.11 standards, an association request asks for network access, but does not provide a traffic profile. The inventors have recognized that a requesting WTRU 18 can have information concerning the kind of traffic the WTRU may transmit or receive and that it is beneficial to provide such information to an AP 54 during the association phase. The AP 54 then uses an associated the Radio Resource Management (RRM) admission control 56 to decide how to admit the WTRU 18 to the WLAN based on the predicted traffic signaled by the WTRU. The procedure is illustrated in Figure 2 and explained below.

When the WTRU 18 initiates an association request, the WTRU 18 is configured to inform the AP 54 in the Association Request frame 15, shown in Figure 2, about the predicted traffic and expected time required for communication. The WTRU is preferably configured to report different traffic levels, for example, low, medium, or high. The WTRU may also be configured to additionally report a data flow characteristic, for example, bursty or continuous. A user interface can be provided, for example, a keyboard, to enable a user to input traffic characteristics in terms of application, for example, email, web browsing, gaming, net meeting, etc.

The traffic prediction report can be mandatory or optional depending on the network implementation. However, where a WTRU optionally provides a traffic prediction report in an Association Request, the RRM 56 of the AP 54 may be configured to provide selectively defined preferred treatment to such requests in comparison to requests which do not contain a traffic prediction report.

Once an AP 54 receives an Association Request 15 with a traffic prediction report from the WTRU 18, the AP 54 can make an intelligent decision based on the prediction. To do this, the AP 54 is preferably configured to decide to accept, reject, or grant limited access to the WTRU 18 in a manner which avoids network congestion by taking into account the received traffic prediction report.

In accordance with the invention, rate negotiation between the WTRU 18 and the AP 54 may be performed at the association phase. Preferably, the AP 54 includes an admission rate in an Association Response frame 17 which it sends to the WTRU 18. Where the admission rate is lower than a requested rate, the WTRU is preferably configured to decide if it can accept a lower rate. For example, The AP can store the traffic profiles for different types WLAN cards used by WTRUs for communicating with the AP. Since these cards may be used by different WTRUs, the WLAN cards can be graded into different groups to differentiate the respective services. The AP can make a decision based on the historical records of the traffic profile with respect to different services.

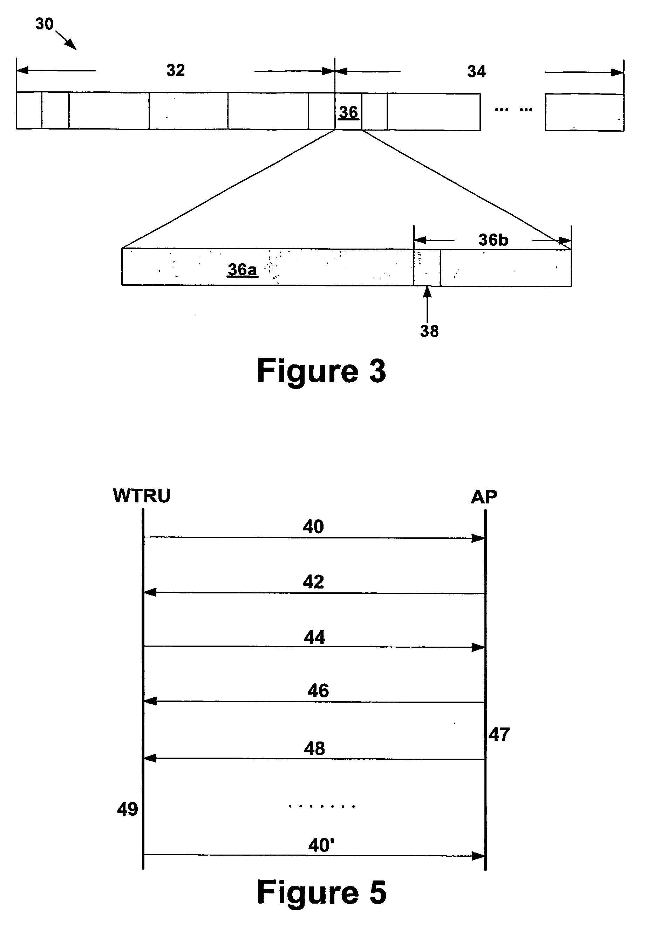

Standard Association Request formats are defined in the 802.11 family of standards. As shown in Figure 3, a standard Association Request format 30 contains a Medium Access Control (MAC) Header portion 32 and a frame body 34 which includes a Capability Information Field (CIF) 36. The CIP 36 is divided into a field 36a for capacity information and a Reserved Field 36b. In order for a WTRU to inform an AP of its traffic profile, the WTRU preferably utilizes a portion 38 of the "Reserved Field" 36b in the CIF 36 of an Association Request frame 30.

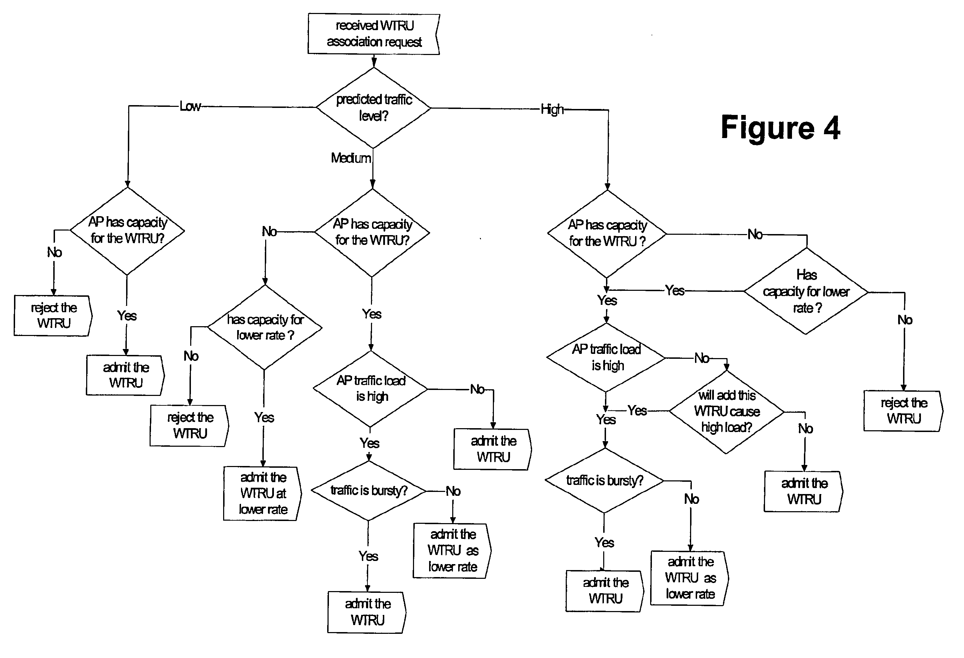

Figure 4 illustrate an example of the AP decision making process in the association phase using the traffic prediction information. In this example, all WTRUs are assumed to have the same priority and the AP is designed to be more cautious when admitting high traffic users. The AP decision making can be different in different implementation.

In the Figure 4 example, an AP receives an association request from a WTRU with either a low, medium or high predicted level communicated, preferably in the "Reserved Field" 36b in the CIF 36 of a standard Association Request frame 30. The AP processes the request to admit or reject the WTRU based or the communicated prediction, AP capacity, AP traffic load and whether the load is busty, if high. Figure 4 provides an example decision tree for selecting to accept or reject the WTRU based on these factors.

The invention can also be advantageously employed after a WTRU has obtained a connection from an AP. Figure 5 illustrates a preferred methodology where the traffic prediction information is used to maintain efficient bandwidth utilization. The AP is preferably configured to make a decision to prioritize different users' access to the network, based on the predicted traffic information in order to obtain fairness.

In the example of Figure 5, a Ready To Send/Clear To Send (RTS/CTS) procedure is used to permit the sending of data from a WTRU to an AP. The WTRU informs the AP of its traffic profile in an RTS frame which it sends at step 40. In response the AP provides a CTS signal at step 42 which includes a duration for data transmission. The WTRU then sends data at step 44 in accordance with the CTS and after receiving the data the AP sends an acknowledgement signal (ACK) at step 46.

The mechanism to vary the access can be that the AP advises the WTRU (e.g., using a MAC management frame) to change the size of the contention window (CW) or change the backoff timer, thus changing the frequency at which the WTRU can have access to the medium. Accordingly, in addition to configuring the WTRUs to determine and transmit traffic prediction information, the WTRUs are preferably configured with a variable contention window control to accept instructions from an AP to adjust the WTRUs contention window.

For the packet data transmission, a random backoff time for each packet is typically selected uniformly between 0 and CW-1, where CW is the contention window value. CW depends on the number of previous transmission failures for that packet. At a first transmission attempt, CW is set to a value CWmin, i. e. a minimum contention window. After each unsuccessful transmission, CW is typically doubled, up to a maximum value, CWmax. After a successful transmission, CW is typically reset to CWmin for the next packet. For a system compliant with the IEEE 802.11(b) standard, the values of CWmin and CWmax are designated as 32 and 1024 in 802.11b.

Instead of the WTRUs having a fixed CWmin, the WTRUs preferably have a relatively low default CWmin with the ability to reset CWmin in response to traffic control signals from the AP. When there is high overall traffic conditions, CWmin is preferably increased to avoid excessive collisions and backoffs; on the other hand. When the overall traffic conditions are low, the WTRUs preferably employ their default CWmin settings to avoid unnecessary idle airtime during which no station attempts to transmit.

An operative example is shown in Figure 5. When the AP detects congestion at 47, it sends a signal at step 48 to certain WTRU(s) to increase their contention window (CW) size or backoff timer. When these WTRUs have collisions, illustrated at step 49, they will wait for a longer time before trying to transmit again by initiating a new RTS 40'. In this way, the congestion situation is mitigated.

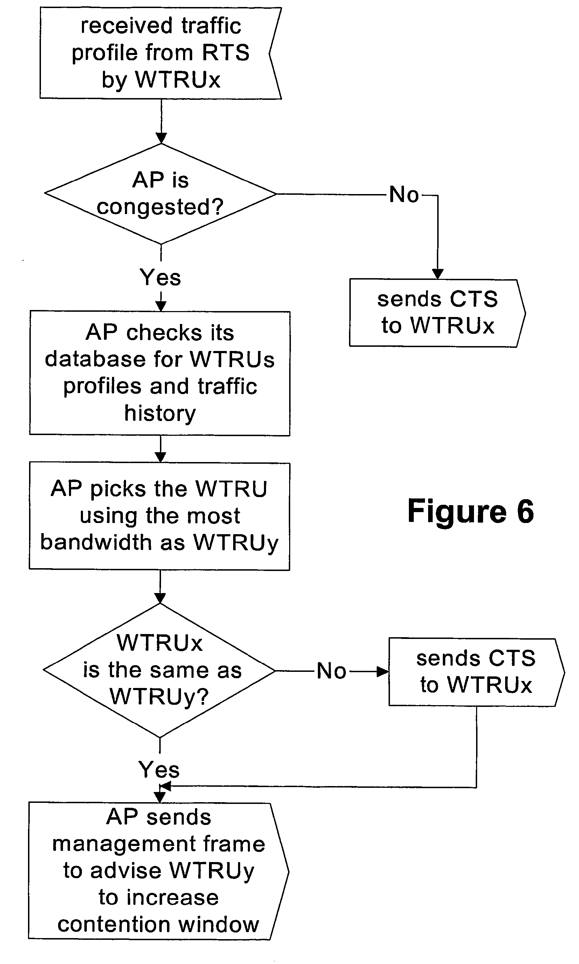

Figure 6 illustrates an example of the AP flow control during normal transmission phase. In Figure 6, an AP receives an RTS frame with a traffic profile from WTRUx and stores the profile for later use. If the AP is not congested, it responds with a CTS frame to WTRUx. However, when there is congestion, it uses the stored profiles of all WTRUs with which it is communicating to determine which WTRU is using the most bandwidth and identifies it as WTRUy. If WTRUx is the WTRU using the most bandwidth(i.e. WTRUx=WTRUy), the AP sends a management frame to increase the contention window of WTRUx. Otherwise the AP sends a CTS frame to WTRUx and then sends a management frame to increase the contention window of WTRUy. The AP flow control can be triggered by other means than receiving of an RTS with traffic prediction, for example, a timer.

Although the features and elements of the present invention are described in the preferred embodiments in particular combinations, each feature or element can be used alone (without the other features and elements of the preferred embodiments) or in various combinations with or without other features and elements of the present invention.

## Claims

1. A wireless transmit/receive unit (18), WTRU, configured for use in wireless communications, having traffic congestion control, comprising:
a processing unit configured to generate traffic prediction information;
a transmitter configured to embed the traffic prediction information in wireless communication frames transmitted by the WTRU to a controlling entity; and
a receiver configured to receive wireless communication frames from the controlling entity including instructions responsive to traffic prediction information transmitted to the controlling entity,
**characterized in that**
the traffic prediction information includes predicted traffic volume and expected time required for communication;
the instructions received by the receiver from the controlling entity include contention window adjustment instructions responsive to said traffic prediction information; and
the WTRU further comprises a contention window control for adjusting the contention window upon which the transmitter bases transmission responsive to the contention window adjustment instructions.

2. The WTRU according to claim 1 configured to operate in an IEEE 802.11 compliant system, wherein the transmitter is configured to embed traffic prediction information in association request frames and the receiver is configured to receive responsive instructions granting or denying association in whole or in part generated based upon transmitted embedded traffic prediction information.

3. The WTRU according to claim 1, wherein the contention window control sets a default minimum contention window and increases the minimum contention window responsive to contention window adjustment instructions received from the controlling entity reflective of increased wireless communication congestion.

4. The WTRU according to claim 1 configured to operate in an IEEE 802.11 compliant system, wherein the transmitter is configured to embed traffic prediction information in request to send, RTS, frames and the receiver is configured to receive contention window adjustment instructions in management frames from the controlling entity.

5. An access point (54), AP, configured for use in wireless communications and to implement traffic congestion control, comprising:
a receiver configured to detect embedded traffic prediction information in wireless communication frames transmitted by a WTRU (18);
a processing unit configured to evaluate the received traffic prediction information from the WTRU in combination with other communication traffic data and to generate a responsive instruction; and
a transmitter configured to transmit wireless communication frames including generated instructions responsive to the WTRU;
**characterized in that**
the traffic prediction information includes predicted traffic volume and expected time required for communication; and
the instructions transmitted by said transmitter include contention window adjustment instructions responsive to said traffic prediction information.

6. The AP according to claim 5 configured to operate in an IEEE 802.11 compliant system, wherein the receiver is configured to detect embedded traffic prediction information in a received association request frame from the WTRU, the processing unit is configured to evaluate traffic prediction information received in an association request frame from the WTRU and to generate an admission grant, limited admission grant or an admission denial instruction based thereon and the transmitter is configured to transmit the generated admission instruction to the WTRU.

7. The AP according to claim 5 configured to operate in an IEEE 802.11 compliant system.

8. The AP according to claim 7, wherein the transmitter is configured to transmit contention window adjustment instructions to selected WTRUs generated by the processing unit based upon received traffic prediction information from multiple WTRUs.

9. The AP according to claim 8, wherein the processing unit generates an instruction to increase contention window size when a selected congestion level is determined in connection with evaluating received traffic prediction information.

10. The AP according to claim 8, wherein the receiver is configured to detect embedded traffic prediction information in request to send, RTS, frames transmitted from WTRUs and the transmitter is configured to transmit contention window adjustment instructions in management frames.

## Patentansprüche

1. Drahtlose Sende-/Empfangseinheit WTRU (18), die für eine Verwendung bei Drahtloskommunikationen mit einer Verkehrsstauregelung konfiguriert ist, welche aufweist:
eine Verarbeitungseinheit, die konfiguriert ist, um Verkehrsvorhersageinformationen zu erzeugen,
einen Sender, der konfiguriert ist, um die Verkehrsvorhersageinformationen in Drahtloskommunikationsrahmen einzubetten, die von der WTRU zu einer Steuereinheit gesendet werden, und
einen Empfänger, der konfiguriert ist, um Drahtloskommunikationsrahmen von der Steuereinheit, welche Befehle einschließen, die auf zu der Steuereinheit gesendete Verkehrsvorhersageinformationen ansprechen, zu empfangen,
**dadurch gekennzeichnet, dass**
die Verkehrsvorhersageinformationen das vorhergesagte Verkehrsaufkommen und die erwartete für die Kommunikation benötigte Zeit einschließen,
die Befehle, die durch den Empfänger von der Steuereinheit empfangen werden, Konkurrenzfenster-Einstellbefehle, ansprechend auf die Verkehrsvorhersageinformationen, einschließen, und
die WTRU ferner eine Konkurrenzfenstersteuerung zum Einstellen des Konkurrenzfensters, worauf der Sender das Senden, ansprechend auf die Konkurrenzfenster-Einstellbefehle, basiert, aufweist.

2. WTRU nach Anspruch 1, die konfiguriert ist, um in einem IEEE-802.11-kompatiblen System zu arbeiten, wobei der Sender konfiguriert ist, um Verkehrsvorhersageinformationen in Assoziationsanforderungsrahmen einzubetten, und der Empfänger konfiguriert ist, um Antwortbefehle zu empfangen, die die Assoziation insgesamt oder teilweise gewähren oder verweigern, welche auf der Grundlage gesendeter eingebetteter Verkehrsvorhersageinformationen erzeugt werden.

3. WTRU nach Anspruch 1, wobei die Konkurrenzfenstersteuerung ein minimales Soll-Konkurrenzfenster festlegt und das minimale Konkurrenzfenster ansprechend auf von der Steuereinheit empfangene, einen verstärkten Stau der Drahtloskommunikation widerspiegelnde Konkurrenzfenster-Einstellbefehle erweitert.

4. WTRU nach Anspruch 1, die konfiguriert ist, um in einem IEEE-802.11-kompatiblen System zu arbeiten, wobei der Sender konfiguriert ist, um Verkehrsvorhersageinformationen in Sendeanforderungsrahmen (RTS-Rahmen) einzubetten, und der Empfänger konfiguriert ist, um Konkurrenzfenster-Einstellbefehle in Verwaltungsrahmen von der Steuereinheit zu empfangen.

5. Zugriffspunkt AP (54), der für eine Verwendung bei Drahtloskommunikationen und zur Implementation einer Verkehrsstauregelung konfiguriert ist, welcher aufweist:
einen Empfänger, der konfiguriert ist, um eingebettete Verkehrsvorhersageinformationen in von einer WTRU (18) gesendeten Drahtloskommunikationsrahmen zu erfassen,
eine Verarbeitungseinheit, die konfiguriert ist, um die von der WTRU in Kombination mit anderen Kommunikationsverkehrsdaten empfangenen Verkehrsvorhersageinformationen zu beurteilen und einen Antwortbefehl zu erzeugen, und
einen Sender, der konfiguriert ist, um Drahtloskommunikationsrahmen, die erzeugte Befehle enthalten, ansprechend auf die WTRU zu senden,
**dadurch gekennzeichnet, dass**
die Verkehrsvorhersageinformationen das vorhergesagte Verkehrsaufkommen und die erwartete für die Kommunikation benötigte Zeit einschließen, und
die Befehle, die durch den Sender gesendet werden, Konkurrenzfenster-Einstellbefehle, ansprechend auf die Verkehrsvorhersageinformationen, einschließen.

6. AP nach Anspruch 5, der konfiguriert ist, um in einem IEEE-802.11-kompatiblen System zu arbeiten, wobei der Empfänger konfiguriert ist, um eingebettete Verkehrsvorhersageinformationen in einem empfangenen Assoziationsanforderungsrahmen von der WTRU zu erfassen, die Verarbeitungseinheit konfiguriert ist, um in einem Assoziationsanforderungsrahmen von der WTRU empfangene Verkehrsvorhersageinformationen zu beurteilen und auf der Grundlage davon einen Zugangserlaubnisbefehl, einen begrenzten Zugangserlaubnisbefehl oder einen Zugangsverweigerungsbefehl zu erzeugen, und der Sender konfiguriert ist, um den erzeugten Zugangsbefehl zur WTRU zu senden.

7. AP nach Anspruch 5, der konfiguriert ist, um in einem IEEE-802.11-kompatiblen System zu arbeiten.

8. AP nach Anspruch 7, wobei der Sender konfiguriert ist, um Konkurrenzfenster-Einstellbefehle zu ausgewählten WTRU zu senden, die von der Verarbeitungseinheit auf der Grundlage empfangener Verkehrsvorhersageinformationen von mehreren WTRU erzeugt werden.

9. AP nach Anspruch 8, wobei die Verarbeitungseinheit einen Befehl zum Erhöhen der Konkurrenzfenstergröße erzeugt, wenn ein ausgewähltes Stauniveau in Zusammenhang mit beurteilenden empfangenen Verkehrsvorhersageinformationen bestimmt wird.

10. AP nach Anspruch 8, wobei der Empfänger konfiguriert ist, um eingebettete Verkehrsvorhersageinformationen in von WTRU gesendeten Sendeanforderungsrahmen (RTS-Rahmen) zu erfassen, und der Sender konfiguriert ist, um Konkurrenzfenster-Einstellbefehle in Verwaltungsrahmen zu senden.

## Revendications

1. Unité de transmission/réception sans fil (18), WTRU, configurée pour être utilisée dans des communications sans fil, possédant une commande de congestion de trafic, comprenant :
une unité de traitement configurée pour générer des informations de prédiction de trafic ;
un émetteur configuré pour incorporer les informations de prédiction de trafic dans des trames de communication sans fil transmises par la WTRU à une entité de commande ; et
un récepteur configuré pour recevoir des trames de communication sans fil à partir de l'entité de commande comprenant des instructions en réponse à des informations de prédiction de trafic transmises à l'entité de commande,
**caractérisée en ce que**
les informations de prédiction de trafic comprennent un volume de trafic prédit et un temps prévu nécessaires pour une communication ;
les instructions reçues par le récepteur à partir de l'entité de commande comprennent des instructions de réglage de fenêtre de contention en réponse auxdites informations de prédiction de trafic ; et
la WTRU comprend en outre une commande de fenêtre de contention pour régler la fenêtre de contention sur laquelle l'émetteur base la transmission en réponse aux instructions de réglage de fenêtre de contention.

2. WTRU selon la revendication 1, configurée pour fonctionner dans un système conforme à la norme IEEE 802.11, dans laquelle l'émetteur est configuré pour incorporer des informations de prédiction de trafic dans des trames de demande d'association et le récepteur est configuré pour recevoir des instructions de réponse autorisant ou refusant une association en totalité ou en partie, générées sur la base d'informations de prédiction de trafic incorporées transmises.

3. WTRU selon la revendication 1, dans laquelle la commande de fenêtre de contention règle une fenêtre de contention minimum par défaut et augmente la fenêtre de contention minimum en réponse à des instructions de réglage de fenêtre de contention reçues à partir de l'entité de commande indiquant une congestion de communication sans fil plus importante.

4. WTRU selon la revendication 1 configurée pour fonctionner dans un système conforme à la norme IEEE 802.11, dans laquelle l'émetteur est configuré pour incorporer des informations de prédiction de trafic à la demande de trames d'envoi, RTS, et le récepteur est configuré pour recevoir des instructions de réglage de fenêtre de contention dans des trames de gestion à partir de l'entité de commande.

5. Point d'accès (54), AP, configuré pour être utilisé dans des communications sans fil et pour réaliser une commande de congestion de trafic, comprenant :
un récepteur configuré pour détecter des informations de prédiction de trafic incorporées dans des trames de communication sans fil transmises par une WTRU (18) ;
une unité de traitement configurée pour évaluer les informations de prédiction de trafic reçues à partir de la WTRU en association à d'autres données de trafic de communication et pour générer une instruction en réponse ; et
un émetteur configuré pour transmettre des trames de communication sans fil comprenant des instructions générées en réponse à la WTRU ;
**caractérisé en ce que**
les informations de prédiction de trafic comprennent un volume de trafic prédit et un temps prévu nécessaires pour une communication ; et
les instructions transmises par ledit émetteur comprennent des instructions de réglage de fenêtre de contention en réponse auxdites informations de prédiction de trafic.

6. AP selon la revendication 5 configuré pour fonctionner dans un système conforme à la norme IEEE 802.11, dans lequel le récepteur est configuré pour détecter des informations de prédiction de trafic incorporées dans une trame de demande d'association reçue à partir de la WTRU, l'unité de traitement est configurée pour évaluer des informations de prédiction de trafic reçues dans une trame de demande d'association à partir de la WTRU et pour générer une instruction d'autorisation d'admission, d'autorisation d'admission limitée ou de refus d'admission sur la base de celles-ci et l'émetteur est configuré pour transmettre l'instruction d'admission générée à la WTRU.

7. AP selon la revendication 5, configuré pour fonctionner dans un système conforme à la norme IEEE 802.11.

8. AP selon la revendication 7, dans lequel l'émetteur est configuré pour transmettre des instructions de réglage de fenêtre de contention à des WTRUs sélectionnées, générées par l'unité de traitement sur la base d'informations de prédiction de trafic reçues à partir de multiples WTRUs.

9. AP selon la revendication 8, dans lequel l'unité de traitement génère une instruction pour augmenter la taille de fenêtre de contention lorsqu'un niveau de congestion sélectionné est déterminé en association à une évaluation d'informations de prédiction de trafic reçues.

10. AP selon la revendication 8, dans lequel le récepteur est configuré pour détecter des informations de prédiction de trafic incorporées à la demande de trames d'envoi, RTS, transmises à partir de WTRUs et l'émetteur est configuré pour transmettre des instructions de réglage de fenêtre de contention dans des trames de gestion.
